Europäisches Patentamt
European Patent Office
Office européen des brevets

(19)

(11) Numéro de publication: **0 408 449 A1**

(12) **DEMANDE DE BREVET EUROPEEN**

(21) Numéro de dépôt: **90401997.3**

(51) Int. Cl.5: **C08G 69/44**

(22) Date de dépôt: **11.07.90**

Une requête en rectification page 23 (tableau 9) a été présentée conformément à la règle 88 CBE. Il est statué sur cette requête au cours de la procédure engagée devant la division d'examen (Directives relatives à l'examen pratiqué à l'OEB, A-V, 2.2).

(30) Priorité: **12.07.89 FR 8909383**

(43) Date de publication de la demande: **16.01.91 Bulletin 91/03**

(84) Etats contractants désignés: **AT BE CH DE DK ES FR GB GR IT LI LU NL SE**

(71) Demandeur: **ATOCHEM**
**4 & 8, Cours Michelet La Défense 10 10**
**F-92800 Puteaux(FR)**

(72) Inventeur: **Judas, Didier**
**11, rue Beudant**
**F-75017 Paris(FR)**

(54) **Copolyesteramides semialiphatiques thermotropes et leur procédé de préparation.**

(57) Copolyesteramides semialiphatiques thermotropes constitués des unités récurrentes

I
II
III

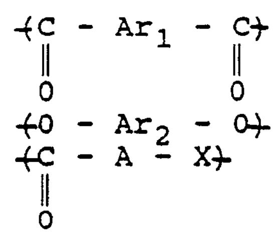

dans lesquelles $Ar_1$, représente un radical aromatique et/ou cycloaliphatique et $Ar_2$ un radical aromatique, X représente NH ou CO et A une chaîne aliphatique.

Ils sont obtenus par condensation d'une diacide aromatique ou cycloaliphatique, un diphénol aromatique et un aminoacide aliphatique et/ou un lactame et/ou un polyamide diacide aliphatique.

EP 0 408 449 A1

# COPOLYESTERAMIDES SEMIALIPHATIQUES THERMOTROPES ET LEUR PROCEDE DE PREPARATION

La présente invention concerne des copolyesteramides semialiphatiques thermotropes constitués d'entités issues d'un diacide aromatique ou de ses dérivés, d'un diphénol ou de ses dérivés, d'un aminoacide et/ou d'un lactame et/ou d'un polyamide diacide à structures aliphatiques ou de leurs dérivés L'invention concerne également leur procédé de fabrication.

Ces copolyesters amides possèdent la caractéristique d'être thermotropes, c'est-à-dire qu'ils sont capables de donner des masses fondues anisotropes qui sont faciles à conformer par filage ou moulage.

Comme indiqué dans le EP-A 0010051, la mise en évidence de l'anisotropie des polyesters peut se faire par la méthode thermo-optique TOT décrite dans le FR-A 2 270 282. Lorsqu'on observe le copolymère à l'état fondu dans des systèmes optiques équipés de polariseurs croisés, il se produit une transmission de la lumière polarisée et création d'une forte biréfringence alors que la transmission de la lumière et la biréfringence sont nulles pour les produits isotropes. De ce fait, les masses fondues possèdent une orientation propre et un degré relativement élevé d'organisation qui se retrouvent sur les articles conformés tels que les fils, films, objets moulés, leur conférant déjà à l'état brut des propriétés améliorées telles que module, ténacité, qu'on n'observe pas habituellement sur les produits bruts isotropes. En particulier ces objets moulés possèdent des caractéristiques intéressantes dans une direction, comparables à celle de matières plastiques renforcées par des fibres de verre.

Les copolyesteramides thermotropes connus du EP-A 0010051 , mais aussi du EP-A 0007715, des US-A 4 330 457, 4 355 132, 4 182 842, et du FR-A 2 607 818 sont tous constitués d'entités totalement aromatiques et/ou cycliques.

De façon générale les copolymères thermotropes, s'ils possèdent d'excellentes propriétés mécaniques ont en contre partie des températures de fusion élevées : de l'ordre de 200 à 400 °C et plus généralement de 270 à 370 °C. Ces températures élevées nécessitent des appareillages de transformation adaptés et entraînent une consommation d'énergie supérieure à celle nécessaire à la transformation des résines classiques. De plus, lorsque les températures de fusion sont élevées l'obtention de pièces moulées possédant d'excellentes propriétés mécaniques s'avère délicate voire impossible.

L'intérèt de l'introduction dans les copolyesters d'entités à structure aliphatique issues d'aminoacide et/ou de lactame et/ou de polyamide diacide est de réaliser des produits dont la température de fusion, selon la proportion d'entités à structure aliphatique présentes dans le copolymère, est abaissée, généralement de l'ordre de 10 à 50 °C, par rapport à celle des copolyesters totalement aromatiques ou cycliques, de structure, à cette exception près, globalement sensiblement voisine pour des propriétés également sensiblement voisines.

Les copolyesteramides selon l'invention sont constituées des unités de récurrence suivantes :

$$\text{I} \qquad -\!\!\!\left(\underset{\underset{O}{\|}}{C} - Ar_1 - \underset{\underset{O}{\|}}{C}\right)\!\!\!-$$

$$\text{II} \qquad -\!\!\!\left(O - Ar_2 - O\right)\!\!\!-$$

$$\text{III} \qquad -\!\!\!\left(\underset{\underset{O}{\|}}{C} - A - X\right)\!\!\!-$$

dans lesquelles :

$Ar_1$ représente un radical aromatique et/ou cycloaliphatique, $Ar_2$ représente un radical aromatique et X est NH ou C = 0 avec :

si X est NH : A est une chaîne aliphatique en $C_nH_{2n}$ linéaire ou ramifiée, et n compris entre 4 et 14

et si X est C = 0 : l'unité de récurrence

$$-\!\!\!\left(\underset{\underset{O}{\|}}{C} - A - X\right)\!\!\!-$$

correspond à un oligomère de polyamide alpha-oméga diacide de formule :

$$\left(\underset{\underset{O}{\|}}{C} - R_1 - NH\right)_m \underset{\underset{O}{\|}}{C} - R_2 - \underset{\underset{O}{\|}}{C} \left(NH - R_1 - \underset{\underset{O}{\|}}{C}\right)_{m'}$$

avec :

$R_1$ représente une chaîne aliphatique en Cn, $H_{2n'}$ linéaire ou ramifiée, $n'$ étant compris entre 4 et 14 ou une structure

$$R_3 - \underset{\underset{O}{\|}}{C} - NH - R_4$$

avec $R_3$ et $R_{4'}$ identiques ou différents, représentant une chaîne aliphatique en $C_{n''}H_{2n''}$, linéaire ou ramifiée, $n''$ étant compris entre 2 et 24

et $R_2$ représentant un reste de diacide aliphatique, cycloaliphatique ou aromatique, ayant jusqu'à 24 atomes de carbone.

m et $m'$, identiques ou différents étant compris entre 0 et 50 au moins l'un des deux étant au moins égal à 1.

Dans les unités de récurrence I et II les radicaux divalents $Ar_1$ et $Ar_2$ représentent chacun un radical comportant un ou plusieurs noyaux aromatiques pouvant être accolés ou reliés entre eux soit par liaison covalente, soit par l'intermédiaire d'un atome d'oxygène ou de soufre, ou encore par l'intermediaire d'un radical ou ramifié, saturé ou insaturé, pouvant comporter au sein de cette chaîne un ou plusieurs atomes d'oxygène et/ou de soufre.

Le radical divalent $Ar_1$ peut également représenter un radical cycloaliphatique .

Sur ces noyaux ne sont pas exclues d'éventuelles ramifications telles que des radicaux monovalents de type alkyl ou des atomes de chlore, ou de brome, ou encore des radicaux monovalents de type aromatique lesquels peuvent également comporter d'éventuelles ramifications.

De façon plus précise l'unité de récurrence I représente habituellement une entité issue d'au moins un diacide aromatique ou cycloaliphatique ou de ses dérivés.

En ce qui concerne l'unité de récurrence II, elle représente habituellement une entité issue d'au moins un diphénol ou de ses dérivés.

L'unité de récurrence III peut être issue d'un aminoacide aliphatique et/ou d'un lactame telle qu'elle répond à la formule

$$\left(\underset{\underset{O}{\|}}{C} - A - NH\right)$$

avec A la chaîne aliphatique définie précédemment

Cette unité de récurrence III peut également être issue de la réaction d'un aminoacide aliphatique et/ou d'un lactame avec un diacide.

Dans le cas où le diacide est aliphatique on a une entité III totalement aliphatique. Dans le cas où le diacide est cycloaliphatique ou aromatique, l'entité III est divisée en fait en deux entités, $III'$ correspondant à III, reliées à une entité I selon le schéma suivant :

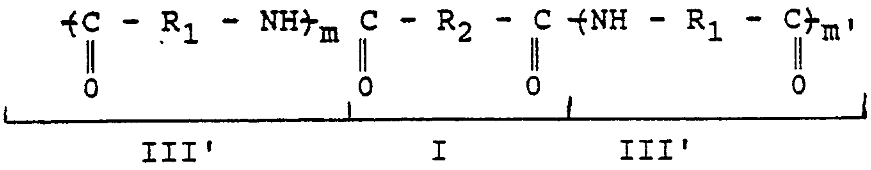

avec $R_1$, la chaîne aliphatique définie précédemment et $R_2$ le reste du diacide définie précédemment.

Cette unité de récurrence III peut également être issue de la réaction d'une diamine aliphatique et d'un diacide. Dans le cas ou ce diacide est aliphatique on a une entité III totalement aliphatique. Dans le cas ou le diacide est cycoaliphatique ou aromatique, l'entité III est divisée en fait en deux entités, III′ correspondant III, reliées à une entité I selon le schéma suivant.

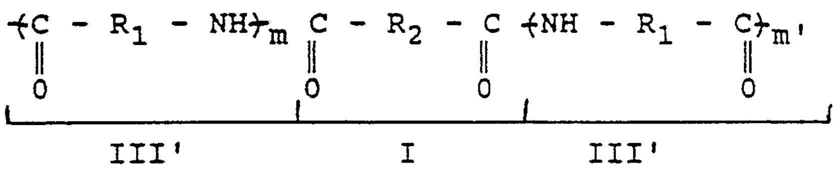

avec $R_1$ représentant une structure

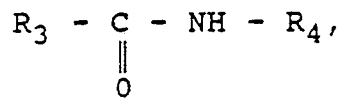

avec $R_3$ et $R_4$ définis précédemment et avec $R_2$ le reste du diacide organique défini précédemment.

Par ailleurs dans les copolyesteramides semialiphatiques selon l'invention où les fonctions

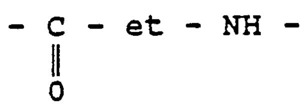

issues de l'amine ou du lactame sont nécessairement liées par l'intermédiaire d'un groupement aliphatique il est recommandé, afin d'obtenir les meilleures propriétés des polymères thermotropes, d'équilibrer de façon convenable les trois entités I, II et III. Pour ce faire le rapport massique de III sur I + II + III devrait de préférence être compris entre 1 et 50 % et mieux entre 1 et 30 %. Par ailleurs dans le cas où X = NH le rapport molaire des entités II/I devrait de préférence être compris entre 0,95 et 1,05. Dans ce cas, les masses moléculaires respectives de chacune des trois entités I, II et III sont de préférence comprises entre 100 et 500 de façon à constituer un copolyesteramide de masse moléculaire de préférence comprise entre 3 000 et 50 000.

Par ailleurs dans le cas ou X = CO le rapport molaire des entités I + III/II devrait être compris de préférence entre 0,95 et 1,05. Dans ce cas les masses moléculaires respectives des deux entités I et II sont de préférence comprises entre 100 et 500, et les masses moléculaires des polyamides dicarboxyliques représentés par l'entité III sont de préférence comprises entre 300 et 15 000 et au mieux 600 et 5 000 de façon à constituer un copolyesteramide de masse moléculaire de préférence comprise entre 3 000 et 50 000.

Les unités de récurrence I proviennent généralement de diacides carboxyliques aromatiques et/ou cycloaliphatiques ou de leurs dérivés tels que leurs diesters. Ils peuvent avoir été utilisés soit seuls, soit en mélanges. Les diacides aromatiques préférés, sont l'acide téréphtalique, l'acide isophtalique, le dicarboxy-4,4′ diphényléther, le dicarboxy-4,4′ diphényl sulfure, le dicarboxy-4,4′ biphényl le dicarboxy-4,4″ paraterphényle, le dicarboxy-2,6 naphtalène, le dicarboxy 2,7 naphtalène, le dicarboxy-1,5 naphtalène, le dicarboxy-4,4′ diphénoxy-1,2 éthane, le dicarboxy-4,4′ diphénoxy-1,4 butane, le dicarboxy-4,4′ diphénoxy-1,6 hexane, le dicarboxy 4,4′ trans stilbène.

Parmi les diacides cycloaliphatiques préférés on peut citer : le dicarboxy-1,4 cyclohexane sous la forme cis et/ou trans.

Les unités de récurrence II proviennent généralement d'un diphénol ou de ses dérivés tels que les diesters. Ils peuvent être utilisés soit seuls soit en mélanges. Les diphénols préférés sont : l'hydroquinone, la chlorohydroquinone, la bromohydroquinone, la méthylhydroquinone, l'éthylhydroquinone, la phénylhydroquinone, le résorcinol, le dihydroxy-4,4′ biphényl, le dihydroxy-4,4′ diphényléther, le dihydroxy-4,4′ diphénylsulfure, le dihydroxy-4,4′ trans stilbène, le dihydroxy-2,6 naphtalène, le dihydroxy 1,5 naphtalène, le dihydroxy-2,7 naphtalène.

Les unités de récurrence III proviennent généralement d'un oligomère de polyamide diacide et/ou d'un aminoacide et/ou d'un lactame. Les oligomères de polyamide dicarboxylique entrant dans la fabrication de l'unité de récurrence III sont connus en eux-mêmes. Ils sont obtenus selon les méthodes classiques de préparation de tels polyamides comme par exemple par polycondensation d'un lactame et/ou d'un aminoacide ou d'un diacide et d'un diamine. Ces polycondensations sont réalisées en présence éventuellement d'un diacide organique. Ces diacides organiques se fixent pendant la polycondensation comme constituants de la chaîne macromoléculaire des polyamides et agissent comme limitateurs de chaîne ce qui permet d'obtenir des oligomères de polyamide alpha-oméga dicarboxylique. Selon l'importance de l'excès de diacide organique dans la polycondensation, il est possible de régler la longueur de la chaîne macromoléculaire et par conséquent le poids moléculaire moyen du polyamide.

Les oligomères de polyamide alpha-oméga dicarboxylique possèdent des masses moléculaires moyennes pouvant varier dans un large intervalle. Ces masses moléculaires moyennes sont de préférence comprises entre 3000 et 15 000 et mieux entre 600 et 5 000.

Les diacides carboxyliques utilisés dans la réaction de synthèse des oligomères de polyamide diacide de l'unité de récurrence III pour permettre d'obtenir un groupement carboxylique à chacune des extrémités de la chaîne polyamide, en ayant le rôle de limitateur de chaîne, sont notamment : les diacides alcanedioïque comme par exemple les acides succinique, adipique, subérique, azélaïque, sébacique, undécanedioïque, dodécanedioïque ou encore des diacides cycloalipha tiques ou aromatiques tels que les acides téréphtalique, isophtalique ou cyclohexanedicarboxylique.

Les lactames et aminoacides aliphatiques utilisés possèdent une chaîne hydrocarbonée dont le nombre d'atomes de carbone est de préférence compris entre 4 et 14. Ils sont habituellement choisis parmi : le butyrolactame, le caprolactame, l'oenantholactame, le décalactame, l'undécanolactame, le dodécanolactame, l'acide 6-aminohexanoïque, l'acide 10-aminodécanoïque, l'acide 11-aminoundécanoïque, l'acide 12-aminododécanoïque.

Parmi les oligomères de polyamide résultant de la polycondensation d'un diacide avec une diamine aliphatique, on peut citer les nylons 6-6, 6-9, 6-10 obtenus à partir d'hexaméthylène diamine et d'acide adipique, azélaïque, sébacique et 1-12 dodécanedioïque, ou encore le nylon 9-6 obtenu à partir de la nonaméthylène diamine et d'acide adipique.

Parmi les oligomères de polyamide résultant de la polycondensation d'un diacide cycloaliphatique ou aromatique avec un diamine aliphatique on peut citer les produits obtenus à partir d'hexaméthylène diamine ou de dodécadiamine 1-12.

Lorsque l'unité de récurrence III provient d'un lactame ou d'un aminoacide aliphatique, ces derniers peuvent correspondre à ceux cités précédemment.

Les copolyesteramides semialiphatiques thermotropes selon l'invention peuvent être obtenus par tout procédé comme par exemple par polycondensation de mélange des composés sous forme de diacide aromatique ou cycloaliphatique ou d'un de ses dérivés et d'aminoacide et/ou de lactame. L'aminoacide et le lactame peuvent être remplacés par un oligomère de polyamide dicarboxylique éventuellement préalablement préparé.

Les différents composants peuvent être introduits dans le milieu réactionnel dans un ordre quelconque, séparément ou ensemble. S'ils peuvent être introduits en mélange, ils peuvent également être introduits les uns après les autres, partiellement ou en totalité, en cours de réaction.

La réaction de condensation s'effectue généralement sous atmosphère inerte à une température comprise entre 100° et 450° C et de préférence entre 150 et 400° C sous agitation jusqu'au taux de condensation choisi habituellement de l'ordre de 80%. Cette température de condensation est en particulier comprise entre 150° C et 400° C lorsque l'anhydride acétique est utilisé et en particulier comprise entre 250° et 400° C lorsque sont directement utilisés des diesters de diphénol.

Les réactifs non réagis et les sous produits formés, tel qu'acide ou un phenol ou l'eau peuvent être éliminés sous vide, pouvant aller jusqu'à 5 Pa.

Les produits selon l'invention peuvent être préparés par polyestérification et polyamidification directe

entre au moins un diacide aromatique ou cycloaliphatique HOOC - Ar1 -COOH, au moins un diphénol HO - $Ar_2$ - OH et au moins un amino-acide

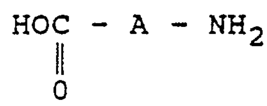

et/ou au moins un lactame

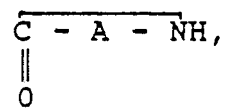

et/ou au moins un polyamide diacide

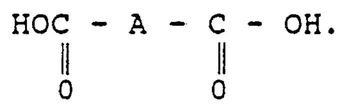

Cette réaction peut être schématisée de la manière suivante
$\sim$C00 + H - X$\sim\sim\rightarrow\sim$COX$\sim$ + $H_20$ (avec X = 0 et NH). Dans ce cas, les polyesteramides obtenus auront des groupes terminaux COOH issus des monomères et/ou oligomères le cas échéant, à fonctions carboxyliques et/ou des groupements terminaux OH et $NH_2$ provenant des monomères à fonction hydroxylée et aminée, étant entendu que le lactame peut conduire également après ouverture du cycle, à des polymères dont les groupes terminaux peuvent être COOH et/ou $NH_2$.

Ils peuvent encore être préparés par réaction de polyestérification et de polyamidification entre au moins un diacide aromatique ou cycloaliphatique HOOC - $Ar_1$ - COOH, au moins un diphénol HO - $Ar_2$ - OH et au moins un aminoacide

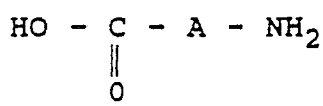

et/ou au moins un lactame

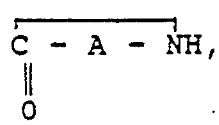

et/ou au moins un polyamide diacide

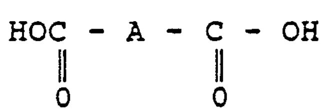

en
présence d'un diarylcarbonate tel le diphényl carbonate

$$R-O-\underset{\displaystyle \overset{\|}{O}}{C}-O-R$$

Dans ce cas, les copolyesteramides obtenus auront des groupes terminaux COOR, issus des monomères et/ou oligomères à fonction carboxylique après réaction avec le diarylcarbonate, c'est-à-dire que R représente un radical monovalent aromatique, et des groupes terminaux OH et NH2 provenant des monomères à fonction hydroxylée et aminée. Selon ce mode de préparation le lactame peut conduire après ouverture de cycle, à la formation de polymères dont les fonctions terminales peuvent être COOR et ou $NH_2$, R étant issu du diarylcarbonate.

La réaction globale peut s'écrire :

$$\sim COOH + HX\sim + R-O-\underset{\displaystyle \overset{\|}{O}}{C}-O-R \rightarrow \sim COX\sim + ROH + CO_2$$

avec X = 0 et NH et R représentant un radical monovalent aromatique.

Dans ce type de procédé, le diarylcarbonate peut réagir dans une première étape avec tous les monomères et oligomères le cas échéant possédant des fonctions carboxyliques.

$$\sim COOH + R-O-\underset{\displaystyle \overset{\|}{O}}{C}-O-R \longrightarrow \sim COOR + ROH + CO_2$$

la réaction d'estérification et d'amification n'ayant lieu que dans un second temps

$\sim COOR + XH \rightarrow \sim COX\sim + ROH$

le diaryl carbonate peut également être incorporé dans le mélange de monomères et d'oligomères le cas échéant. Les deux réactions décrites ci-dessus auront alors également lieu successivement sans avoir à ajouter les comonomères à fonctions terminales OH et $NH_2$ à la fin de l'étape d'estérification par le diaryl carbonate des monomères à fonction terminale acide.

Ils peuvent encore être prépares par réaction de polyestérification et de polyamidification entre au moins un diacide aromatique ou cycloaliphatique HOOC - $Ar_1$ - COOH, au moins un diester de diphénol

$$R'-\underset{\displaystyle \overset{\|}{O}}{C}-O-Ar_2-O-\underset{\displaystyle \overset{\|}{O}}{C}-R'$$

et au moins un amino-acide

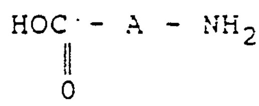

et/ou au moins un lactame

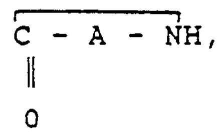

et/ou au moins un polyamide diacide HOOC - A - COOH

Les diesters de diphénols peuvent être obtenus par réaction avec un acide alcanoïque ayant de 2 à 6 atomes de carbone, ou par réaction avec le chlorure dérivé de cet acide alcanoïque ou encore par réaction avec un anhydride de type alcane, comme l'anhydride acétique. Dans ces conditions R′ est un radical monovalent de type alcane en $C_n H_{2n-1}$, avec n = 2 à 6.

Cette modification des fonctions phénoliques peut également être réalisée sur les extrémités $NH_2$ de l'amino-acide présent le cas échéant dans le mélange initial de monomères.

Selon ce procédé, les réactions de polycondensation peuvent permettre la mise en présence indépendamment les unes des autres :

des fonctions acides et des esters de diphénols

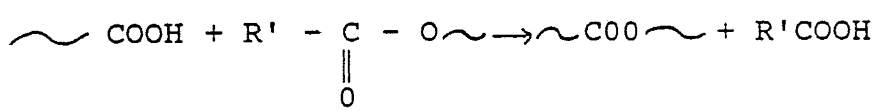

des fonctions acides et amines

~COOH + $H_2N$~→~CONH~ + $H_2O$

des fonctions acides et des amines acylées

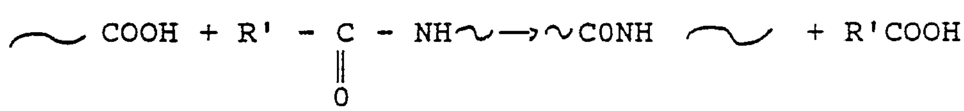

des fonctions acides et d'un lactame

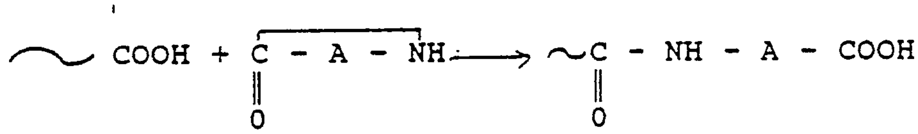

En résumé, ce procédé consiste à faire réagir au moins un diacide aromatique ou cycloaliphatique HOOC - $Ar_1$ - COOH avec au moins un diester de diphénol

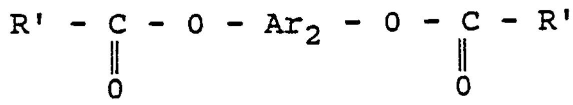

et au moins un amino-acide aliphatique $H_2N$ - A - COOH
et/ou au moins un lactame aliphatique

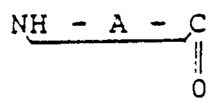

et/ou au moins un polyamide diacide HOOC - A - COOH
ou bien encore faire réagir au moins un diacide aromatique ou cycloaliphatique HOOC - $Ar_1$ - COOH avec au moins un diester de diphénol

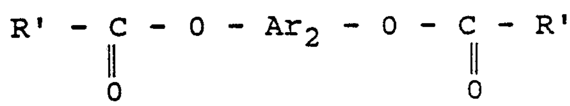

et au moins un amino-acide acylé

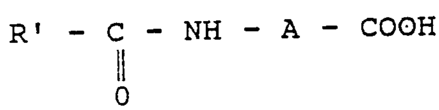

et/ou au moins un lactame aliphatique

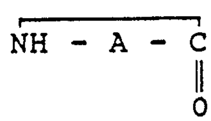

et/ou au moins un polyamide diacide HOOC - A - COOH ou bien encore faire réagir au moins un diacide aromatique ou cycloaliphatique HOOC - $Ar_1$ - COOH avec au moins un diphénol HO - $Ar_2$ - OH et au moins un amino-acide aliphatique $H_2N$ - A - COOH et/ou au moins un lactame aliphatique

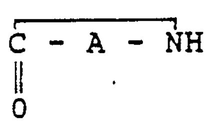

et/ou au moins un polyamide diacide HOOC - A - COOH en présence d'un composé aliphatique capable de réagir avec les extrémités phénoliques et amines des différents monomères pour conduire à au moins un diester de diphénol

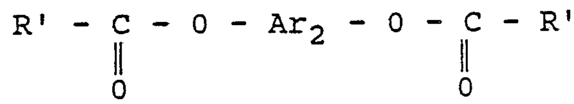

et à au moins un amino-acide acylé

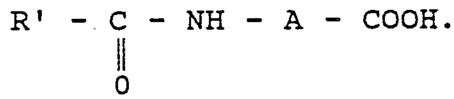

Compte tenu des différents monomères et de la nature de leurs groupements réactifs, les copolyesteramides obtenus selon ce procédé possèdent des groupements terminaux COOH issus des monomères et/ou ou de l'oligomère diacide et/ou des groupements terminaux

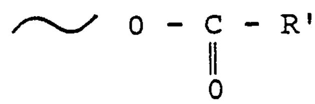

issus eux mêmes du diester de diphénol, et/ou~ NH - Y, issus de l'amino-acide et/ou du lactame, Y étant soit un atome d'hydrogène, soit

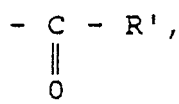

R′ étant défini comme le résidu provenant de l'acide alcanoïque ou de son chlorure ou d'un anhydride.

Dans les différents procédés de polyesterification, la réaction peut se réaliser de façon connue en présence de catalyseurs. Ces catalyseurs peuvent être choisis parmi : les oxydes de dialkylétain comme le dibutylétain, les oxydes de diarylétain, le dioxyde de titane, le trioxyde d'antimoine, les alcoolates de titane ou de zirconium, les sels de métaux alcalins et alcalino terreux d'acides carboxyliques comme l'acétate de zinc ou l'acétate de sodium, les catalyseurs acides gazeux comme les acides de Lewis, en particulier le BF3 ou les halogénures d'hydrogène, en particulier le HCl. La quantité de catalyseur utilisée est de l'ordre de 0,001 à 2 % en poids par rapport à la charge totale de monomères et mieux de l'ordre de 0,01 à 0,5 % en poids.

Les exemples suivants illustrent l'invention sans toutefois la limiter.

Le point de fusion de chaque polycondensat a été déterminé par analyse thermique différentielle.

La viscosité inhérente de chaque polycondensat a été mesurée dans un mélange parachloro phénol - métacrésol à 50/50 en volume, à 45° C avec 0,1 g de produit pour 100 g de solvant. Elle est exprimée en dl g-1.

La plage d'anisotropie a été déterminée d'après l'examen d'un échantillon de chaque polycondensat à l'aide d'un microscope équipé d'une platine chauffante TMS 90 de LINKAMR entre lames de verre pour une vitesse de montée en température de l'ordre de 5 à 20° C par minute.

La contrainte et le module en traction sont exprimés en MPa, et l'allongement à la rupture en %,

suivant la norme ISO R 527.

La contrainte et le module en flexion sont exprimés en MPa selon la norme ISO 178.

**EXEMPLE 1 comparatif**

Dans un réacteur de polycondensation en verre de 250 $cm^3$, agité, muni d'un dispositif permettant le balayage du milieu réactionnel par un gaz inerte, équipé d'une colonne de distillation, prolongée par un réfrigérant et une éprouvette graduée destinée à récupérer les effluents formés lors de la réaction, on introduit les réactifs suivants :

a) acide téréphtalique (T) : 8,31 g (0,05 mole)

b) dicarboxy-4,4′ diphenyl ether (4,4′ DCDPE) : 45,21 g (0,175 mole)

c) diacétate de methylhydroquinone (MeHQ di Ac) : 46,85 g (0,225 mole)

Dans ce conditions le rapport molaire c / a + b est égal à 1 ; a représente 22,22 % en mole du mélange de diacides a + b, ce qui correspond à un rapport b / a = 7 / 2.

Le réacteur est purgé à l'azote, puis plongé sous balayage d'azote dans un bain métallique régulant à 265 °C. Après quelques minutes, la première goutte d'acide acétique distille (to de la réaction). Après 40 minutes à cette température, la quantité d'effluents recueillis, 15 ml, correspond 58,2 % de la quantité d'acide acétique théorique. La réaction est ensuite poursuivie 70 minutes à 265 °C. La température du bain métallique est par la suite augmentée progressivement en 10 minutes jusqu'à 285 °C, température à laquelle la réaction est continuée pendant 15 minutes. A la fin de ce palier, on a récupéré 84,4 % en poids de l'acide acétique théorique, soit 22,8 g. La pression à l'intérieur du réacteur est alors diminuée progressivement de 1008. $10^2$ Pa à 27 Pa. Dans le même temps, la température du bain métallique est portée à 330 °C en l'espace de 70 minutes. Durant cette période, la vitesse d'agitation est réduite au fur et à mesure de l'augmentation de la viscosité. Après 200 minutes de réaction, 130 sous atmosphère inerte et 70 sous pression réduite on a récupéré au total 25,4 ml d'acide acétique, soit 98,6 % de la théorie.

Le polymère obtenu est fibreux et blanchâtre. Il possède une viscosité inhérente de 1,01 $dlg^{-1}$. Sa température de fusion est de 309 °C. Ce polymère est anisotrope dès la fusion jusqu'à plus de 360 °C.

Après avoir été granulé, séché sous vide à 80 °C pendant 6 heures, et moulé sur une presse Mining MCP 25 SA sous forme d'éprouvettes normalisées, les essais de traction et de flexion réalisés sur ce polymère ont conduit aux valeurs suivantes :

- Contrainte en traction : 133 MPa
- Module de traction : 4660 MPa
- Allongement à la rupture : 8,5 %
- Contrainte en flexion : 143,5 MPa
- Module de flexion : 4150 MPa

Ce copolyester comprend les entités suivantes :

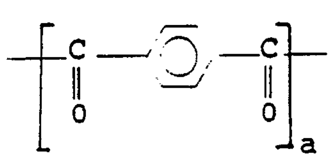 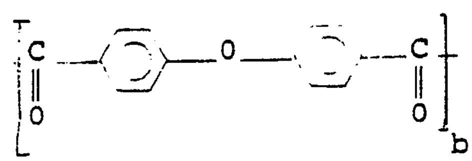 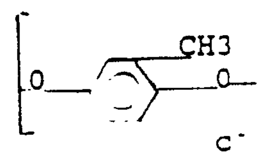

avec a = 0,111 ; b = 0,389 et c = 0,50

**EXEMPLES 2 à 5 comparatifs**

Ils concernent la préparation de copolyesters thermotropes à partir :

- d'acide téréphtalique (T)
- de dicarboxy-4,4′ diphenyléther (4,4′ DCDPE)
- et de diacétate de méthylhydroquinone (MeHQ di Ac)

Les conditions de synthèse sont identiques à celles de l'exemple 1. Elles sont résumées dans le tableau 1.

Le tableau 2 regroupe les principales caractéristiques de ces copolyesters, dont les structures sont détaillées dans le tableau 3.

**EXEMPLES 6 à 8 comparatifs**

Ces exemples illustrent la synthèse et les caractéristiques de copolyesteramides entièrement aromatiques obtenus à partir :
- d'acide téréphtalique (T)
- de dicarboxy-4,4′ diphenylether (4,4′ DCDPE)
- de diacétate de methyl hydroquinone (MeHQ di Ac)
- et d'acide para acétamido benzoïque (PAB)

Les conditions de synthèse sont identiques à celles de l'exemple 1. Elles sont résumées dans le tableau 4. Les principales caractéristiques des copolyesteramides obtenus, lorsque la qualité des barreaux et éprouvettes moulées a permis d'évaluer leurs propriétés, sont regroupées dans le tableau 5. Ces produits répondent aux formules données dans le tableau 6.

**EXEMPLES 9 à 17**

Ces exemples illustrent la synthèse et les caractéristiques de copolyesteramides obtenus à partir d'amino-acide et/ou de lactame à structure aliphatique.

Ils ont été preparés à partir :
- d'acide téréphtalique (T)
- de dicarboxy-4,4′ diphenyl ether (4,4′ DCDPE)
- d'acide isophtalique (I)
- de diacétate de methyl hydroquinone (MeHQ di Ac)
- de diacétate d'hydroquinone (HQ di Ac)
- d'acide amino 11 undécanoïque (A 11)
- et de dodecalactame (L 12)

Les conditions de synthèse, sont identiques à celles de l'exemple 1. Elles sont résumées dans le tableau 7. Les principales caractéristiques des produits obtenus sont regroupées dans le tableau 8. Leurs formules sont précisées dans le tableau 9.

**EXEMPLES 18 à 20**

Ces exemples illustrent la synthèse et les caractéristiques de copolyesteramides obtenus à partir d'un polyamide diacide.

Ils ont été préparés à partir :
- d'acide téréphtalique (T)
- de dicarboxy-4,4′ diphenylether (4,4′ DCDPE)
- de diacétate de methyl hydroquinone (MeHQ di Ac)
- et de polyamide 12 diacide (PA 12. T), résultant de la polycondensation du dodecalactame en présence d'acide téré phtalique d'un poids moléculaire moyen de 640.

Les conditions de synthèse, sont identiques à celles de l'exemple 1. Elles sont résumées dans le tableau 10. Les principales caractéristiques de ces produits sont regroupées dans le tableau 11. Ils répondent aux formules détaillées dans le tableau 12.

# TABLEAU 1

| NUMERO D'EXEMPLE | QUANTITE DE MONOMERES INTRODUITS DANS LE REACTEUR | | | | | | RAPPORT MOLAIRE INITIAL | | DUREE DE REACTION (MIN) | | TEMPERATURE DE REACTION (profil thermique) | TAUX DE TRANSFORMATION (%) | |
|---|---|---|---|---|---|---|---|---|---|---|---|---|---|
| | DIACIDES | | | | DIACETATE DE DIPHENOLS | | | | | | | | |
| | T | | 4,4' DCDPE | | MeHQ di Ac | | 4,4' DCDPE / T | 4,4'DCDPE + T / MeHQ diAc | SOUS COURANT D'AZOTE | SOUS PRESSION REDUITE | | à la fin de l'étape sous azote | final de la réaction |
| | g | mole | g | mole | g | mole | | | | | | | |
| 2 | / | / | 58,1 | 0,225 | 46,85 | 0,225 | 1 / 0 | 1/1 | 130 | 85 | 90 minutes à 280°C<br>65 minutes de 280 à 340°C<br>60 minutes à 340°C | 81,4 | 96,4 |
| 3 | 7,47 | 0,045 | 46,48 | 0,18 | 46,85 | 0,225 | 4 / 1 | 1/1 | 135 | 95 | 75 minutes à 270°C<br>15 minutes de 270 à 290°C<br>20 minutes à 290°C<br>70 minutes de 290 à 330°C<br>50 minutes à 330°C | 85,5 | 98,2 |
| 4 | 16,61 | 0,1 | 32,28 | 0,125 | 46,85 | 0,225 | 5 / 4 | 1/1 | 155 | 45 | 115 minutes à 285°C<br>35 minutes de 285 à 315°C<br>50 minutes à 315°C | 90,3 | 98,7 |
| 5 | 24,92 | 0,15 | 19,37 | 0,075 | 46,85 | 0,225 | 1 / 2 | 1/1 | 195 | 25 | 60 minutes à 265°C<br>10 minutes de 265 à 285°C<br>45 minutes à 285°C<br>40 minutes de 285 à 325°C<br>55 minutes à 325°C | 77,1 | 97,9 |

TABLEAU 2

| NUMERO D'EXEMPLE | TEMPERATURE DE FUSION (° C) | PLAGE D'ANISOTROPIE (° C) | VISCOSITE INHERENTE (dl/g) | CONDITIONS DE MOULAGE | | PROPRIETES EN TRACTION | | | PROPRIETES EN FLEXION | |
|---|---|---|---|---|---|---|---|---|---|---|
| | | | | TEMPERATURE D'INJECTION (° C) | TEMPERATURE DU MOULE (° C) | CONTRAINTE (MPa) | ALLONGEMENT A LA RUPTURE (%) | MODULE (MPa) | CONTRAINTE (MPa) | MODULE (MPa) |
| 2 | 345 | non observèe | Insoluble | 355 | 90 | non mesurable | non mesurable | non mesurable | non mesurable | non mesurable |
| 3 | 312 | de 315 à plus de 360° C | 1,23 | 315 | 90 | 129 | 8,2 | 4510 | 142 | 3950 |
| 4 | 281 | de 285 à plus de 360° C | Insoluble | 295 | 90 | 140 | 4,25 | 6740 | 143 | 4965 |
| 5 | 311 | de 315 à plus de 360° C | 1,79 | 290 | 100 | 139 | 2,2 | 9045 | 133 | 6454 |

TABLEAU 3

| EXEMPLE | STRUCTURE DES PRODUITS |
|---|---|
| 2 | 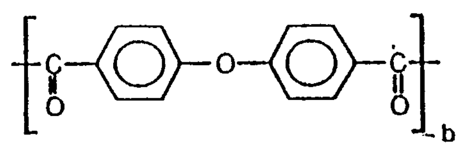 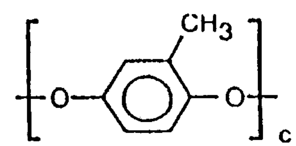 avec b = 0,50 et c = 0,50 |
| 3 | 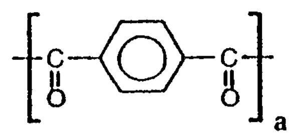 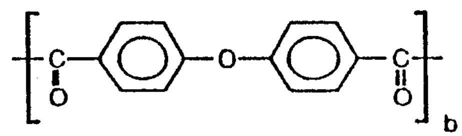 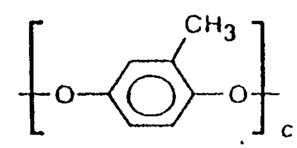 avec a = 0,10 ; b = 0,40 et c = 0,50 |
| 4 | 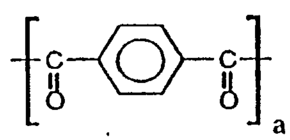 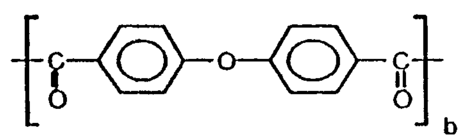 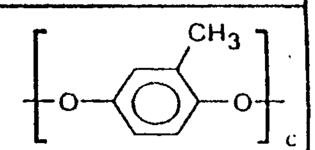 avec a = 0,222 ; b = 0,278 et c = 0,50 |
| 5 | 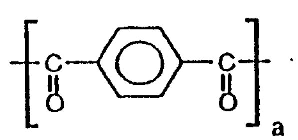 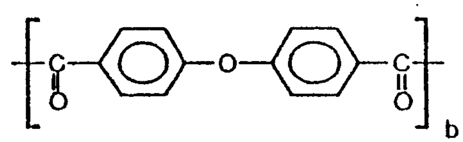 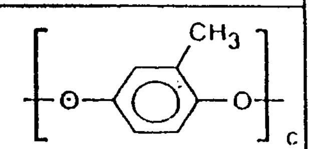 avec a = 0,333 ; b = 0,167 et c = 0,50 |

# TABLEAU 4

| NUMERO D'EXEMPLE | QUANTITE DE MONOMERES INTRODUITS DANS LE REACTEUR | | | | | | | | RAPPORT MOLAIRE INITIAL | | | DUREE DE REACTION (MIN) | | TEMPERATURE DE REACTION (profil thermique) | TAUX DE TRANSFORMATION | |
|---|---|---|---|---|---|---|---|---|---|---|---|---|---|---|---|---|
| | DIACIDES | | | | DIACETATES DE DIPHENOLS | | ACETAMIDO-ACIDE AROMATIQUE | | 4,4' DCDPE / T | 4,4'DCDPE + T / MeHQ diAc | PAB / MeHQdiAc | SOUS COURANT D'AZOTE | SOUS PRESSION REDUITE | | à la fin de l'étape sous azote | total de la réaction |
| | T | | 4,4' DCDPE | | MeHQ di Ac | | PAB | | | | | | | | | |
| | g | mole | g | mole | g | mole | g | mole | | | | | | | | |
| 6 | / | / | 64,56 | 0,25 | 52,05 | 0,25 | 4,48 | 0,025 | 1 / 0 | 1 / 1 | 1 / 10 | 105 | 35 | 35 minutes de 240 à 270°C<br>40 minutes à 270°C<br>40 minutes de 270 à 330°C<br>35 minutes à 330°C | 84,3 | 94,9 |
| 7 | / | / | 64,56 | 0,25 | 52,05 | 0,25 | 8,96 | 0,05 | 1 / 0 | 1 / 1 | 1 / 5 | 100 | 30 | 35 minutes de 240 à 280°C<br>30 minutes à 280°C<br>35 minutes de 280 à 330°C<br>30 minutes à 330°C | 83 | 96,9 |
| 8 | 8,31 | 0,05 | 51,65 | 0,2 | 52,05 | 0,25 | 4,48 | 0,025 | 4 / 1 | 1 / 1 | 1 / 10 | 105 | 40 | 30 minutes de 240 à 270°C<br>20 minutes à 270°C<br>55 minutes de 270 à 330°C<br>40 minutes à 330°C | 85,9 | 96,6 |

TABLEAU 5

| EXEMPLE | TEMPERATURE DE FUSION (°C) | PLAGE D'ANISOTROPIE (°C) | VISCOSITE INHERENTE (dl/g) | CONDITIONS DE MOULAGE | | PROPRIETES EN TRACTION | | | PROPRIETES EN FLEXION | |
|---|---|---|---|---|---|---|---|---|---|---|
| | | | | TEMPERATURE D'INJECTION (°C) | TEMPERATURE DU MOULE (°C) | CONTRAINTE (MPa) | ALLONGEMENT A LA RUPTURE (%) | MODULE (MPa) | CONTRAINTE (MPa) | MODULE (MPa) |
| 6 | 340 | non observée | Insoluble | 350 | 100 | non mesurable | non mesurable | non mesurable | non mesurable | non mesurable |
| 7 | > 360 | non observée | Insoluble | 360 | 100 | non mesurable | non mesurable | non mesurable | non mesurable | non mesurable |
| 8 | 335 | non observée | Insoluble | 340 | 100 | 9 | 0,9 | / | 32 | 3025 |

TABLEAU 6

| EXEMPLE | STRUCTURE DES PRODUITS |
|---|---|
| 6 | 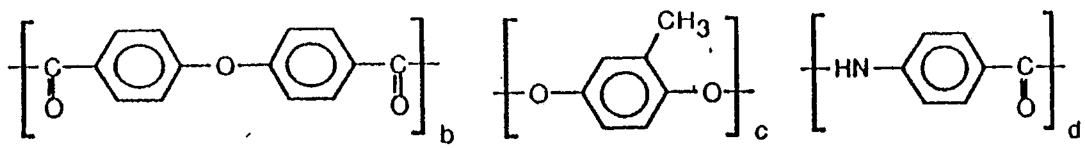 avec b = 0,476 ; c = 0,476 et d = 0,048 |
| 7 | 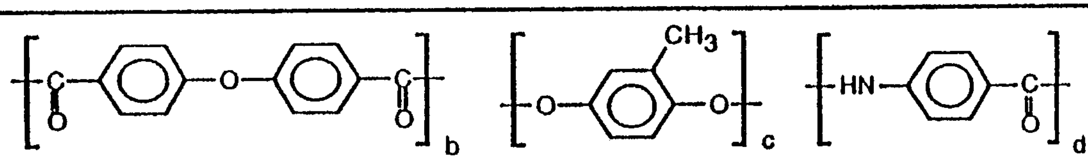 avec b = 0,4545 ; c = 0,4545 et d = 0,091 |
| 8 | 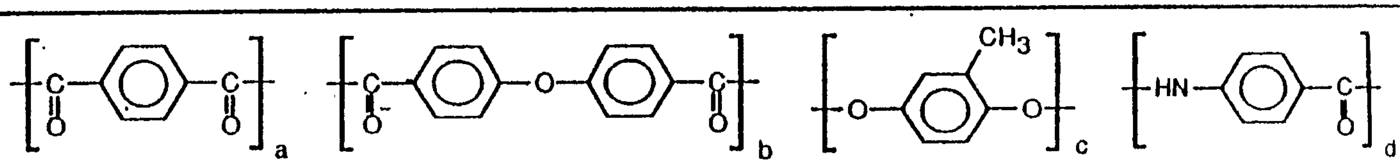 avec a = 0,095 ; b = 0,381 ; c = 0,476 et d = 0,048 |

# TABLEAU 7

| NUMERO D'EXEMPLE | QUANTITE DE MONOMERES INTRODUITS DANS LE REACTEUR | | | | | | | | | | | | | | RAPPORT MOLAIRE INITIAL | | |
|---|---|---|---|---|---|---|---|---|---|---|---|---|---|---|---|---|---|
| | DIACIDES | | | | | | DIACETATES DE DIPHENOLS | | | | LACTAME OU AMINO - ACIDE | | | | | | |
| | T | | 4,4' DCDPE | | I | | Me HQ di Ac | | HQ diAc | | A11 | | L12 | | 4,4' DCDPE / T + I | 4,4' DCDPE + T + I / MeHQ + HQ di Ac | A11 + L12 / MeHQ + HQ di Ac |
| | g | mole | g | mole | g | mole | g | mole | g | mole | g | mole | g | mole | | | |
| 9 | / | / | 64,56 | 0,25 | / | / | 52,05 | 0,25 | / | / | / | / | 4,94 | 0,025 | 1 / 0 | 1 / 1 | 1 / 10 |
| 10 | / | / | 64,56 | 0,25 | / | / | 52,05 | 0,25 | / | / | / | / | 9,87 | 0,05 | 1 / 0 | 1 / 1 | 1 / 5 |
| 11 | 8,31 | 0,05 | 51,65 | 0,2 | / | / | 52,05 | 0,25 | / | / | / | / | 4,94 | 0,025 | 4 / 1 | 1 / 1 | 1 / 10 |
| 12 | 8,31 | 0,05 | 45,21 | 0,175 | / | / | 46,85 | 0,225 | / | / | 4,53 | 0,0225 | / | / | 7 / 2 | 1 / 1 | 1 / 10 |
| 13 | 16,61 | 0,1 | 32,28 | 0,125 | / | / | 46,85 | 0,225 | / | / | 4,53 | 0,0225 | / | / | 5 / 4 | 1 / 1 | 1 / 10 |
| 14 | 16,61 | 0,1 | 12,91 | 0,05 | 12,46 | 0,075 | 46,85 | 0,225 | / | / | 4,53 | 0,0225 | / | / | 2 / 7 | 1 / 1 | 1 / 10 |
| 15 | 24,92 | 0,15 | 19,37 | 0,075 | / | / | 46,85 | 0,225 | / | / | / | / | 4,44 | 0,0225 | 1 / 2 | 1 / 1 | 1 / 10 |
| 16 | 24,92 | 0,15 | 19,37 | 0,075 | / | / | 37,48 | 0,18 | 8,74 | 0,045 | / | / | 4,44 | 0,0225 | 1 / 2 | 1 / 1 | 1 / 10 |
| 17 | 24,92 | 0,15 | 19,37 | 0,075 | / | / | 37,48 | 0,18 | 8,74 | 0,045 | / | / | 8,88 | 0,045 | 1 / 2 | 1 / 1 | 1 / 5 |

**TABLEAU 7 ( SUITE et FIN )**

| NUMERO D'EXEMPLE | DUREE DE REACTION (MIN) | | TEMPERATURE DE REACTION ( profil thermique ) | TAUX DE TRANSFORMATION (%) | |
|---|---|---|---|---|---|
| | SOUS COURANT D'AZOTE | SOUS PRESSION REDUITE | | à la fin de l'étape sous azote | final de la réaction |
| 9 | 160 | 40 | 20 minutes de 230 à 270°C<br>20 minutes à 270°C<br>75 minutes de 270 à 330°C<br>85 minutes à 330°C | 85,4 | 96,6 |
| 10 | 115 | 25 | 40 minutes de 240 à 280°C<br>25 minutes à 280°C<br>50 minutes de 280 à 330°C<br>25 minutes à 330°C | 82,8 | 96,8 |
| 11 | 160 | 25 | 15 minutes de 240 à 260°C<br>25 minutes à 260°C<br>100 minutes de 270 à 330°C<br>45 minutes à 330°C | 83,5 | 97,2 |
| 12 | 120 | 140 | 70 minutes à 265°C<br>10 minutes de 265 à 280°C<br>40 minutes à 280°C<br>70 minutes de 280 à 320°C<br>70 minutes à 320°C | 81,6 | 98,8 |
| 13 | 100 | 140 | 50 minutes à 265°C<br>10 minutes de 265 à 280°C<br>40 minutes à 280°C<br>55 minutes de 280 à 320°C<br>85 minutes de 320 à 340°C | 80,7 | 99,5 |
| 14 | 100 | 115 | 70 minutes à 265 °C<br>10 minutes de 265 à 275°C<br>70 minutes à 275°C<br>50 minutes de 275 à320°C<br>15 minutes à 320°C | 65,8 | 97,9 |
| 15 | 105 | 120 | 70 minutes à 265°C<br>45 minutes de 265 à 305°C<br>50 minutes à 305°C<br>10 minutes de 305 à 320°C<br>50 minutes à 320°C | 69,6 | 99,1 |
| 16 | 110 | 130 | 60 minutes à 270°C<br>10 minutes de 270 à 280°C<br>80 minutes à 280°C<br>35 minutes de 280 à 340°C<br>55 minutes à 340°C | 75,2 | 98,9 |
| 17 | 105 | 165 | 80 minutes à 270°C<br>10 minutes de 270 à 285°C<br>80 minutes à 285°C<br>20 minutes de 285 à 320°C<br>80 minutes à 320°C | 67,6 | 97,3 |

TABLEAU 8

| EXEMPLE | TEMPERATURE DE FUSION (°C) | PLAGE D'ANISOTROPIE (°C) | VISCOSITE INHERENTE (dl/g) | CONDITIONS DE MOULAGE: TEMPERATURE D'INJECTION (°C) | CONDITIONS DE MOULAGE: TEMPERATURE DU MOULE (°C) | PROPRIETES EN TRACTION: CONTRAINTE (MPa) | PROPRIETES EN TRACTION: ALLONGEMENT A LA RUPTURE (%) | PROPRIETES EN TRACTION: MODULE (MPa) | PROPRIETES EN FLEXION: CONTRAINTE (MPa) | PROPRIETES EN FLEXION: MODULE (MPa) |
|---|---|---|---|---|---|---|---|---|---|---|
| 9 | 320 | de 325 à 340°C | Insoluble | 330 | 90 | 64 | 5,3 | 3820 | 54 | 2940 |
| 10 | 310 | de 315 à 330°C | Insoluble | 320 | 90 | 58 | 6,2 | 3460 | 62 | 2945 |
| 11 | 285 | de 290 à plus de 360°C | 0,87 | 300 | 100 | 97 | 5,2 | 4216 | 101 | 3690 |
| 12 | 287 | de 290 à plus de 360°C | 1,1 | 300 | 90 | 117 | 7,7 | 4990 | 129 | 4140 |
| 13 | 282 | de 285 à plus de 360°C | 1,02 | 280 | 90 | 147 | 4,85 | 7270 | 133 | 4455 |
| 14 | 245 | de 250 à plus de 360°C | 1,38 | 275 | 90 | 158 | 4,25 | 8186 | 145 | 5340 |
| 15 | 304 | de 310 à plus de 360°C | Insoluble | 310 | 90 | 140 | 3,05 | 9500 | 111 | 5045 |
| 16 | 312 | de 315 à plus de 360°C | 1,24 | 315 | 90 | 140 | 2,2 | 11000 | 137 | 6265 |
| 17 | 288 | de 290 à plus de 360°C | 1,7 | 295 | 90 | 109 | 2,4 | 7366 | 142 | 6020 |

TABLEAU 9

| EXEMPLE | STRUCTURE DES PRODUITS |
|---|---|
| 9 | 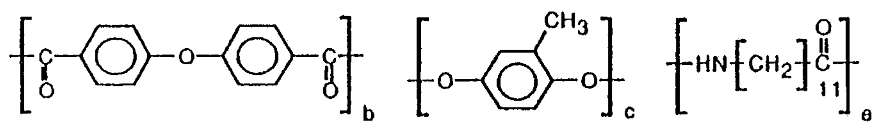 avec b = 0,476 ; c = 0,476 et d = 0,048 |
| 10 | 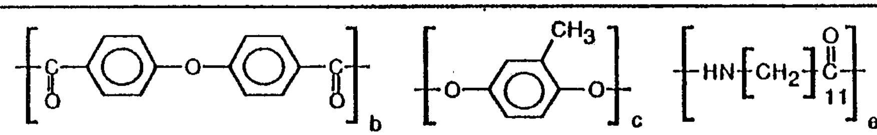 avec b = 0,4545 ; c = 0,4545 et d = 0,091 |
| 11 | 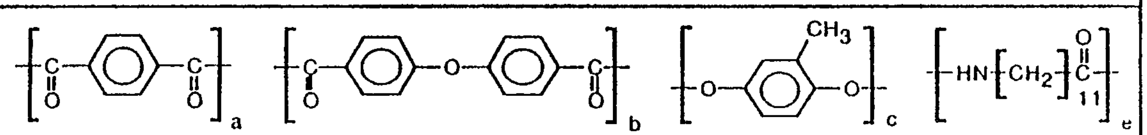 avec a = 0,095 ; b = 0,381 ; c = 0,476 et d = 0,048 |
| 12 | 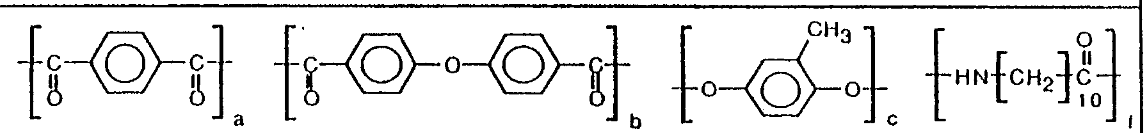 avec a = 0,106 ; b = 0,37 ; c = 0,476 et d = 0,048 |
| 13 | 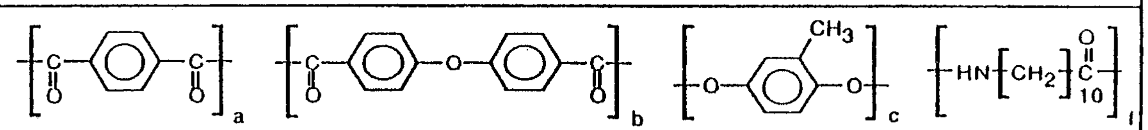 avec a = 0,212 ; b = 0,264 ; c = 0,476 et d = 0,048 |

TABLEAU 9 (SUITE ET FIN)

| EXEMPLE | STRUCTURE DES PRODUITS |
|---|---|
| 14 | 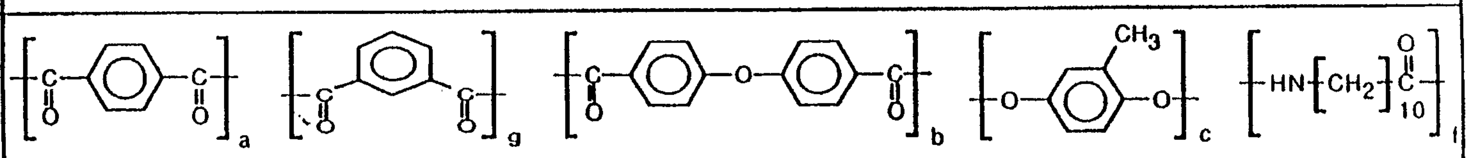 avec a = 0,212 ; g = 0,158 ; b = 0,106 ; c = 0,476 et f = 0,048 |
| 15 | 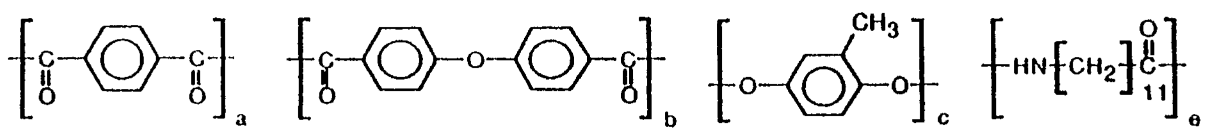 avec a = 0,318 ; b = 0,158 ; c = 0,476 et e = 0,048 |
| 16 | 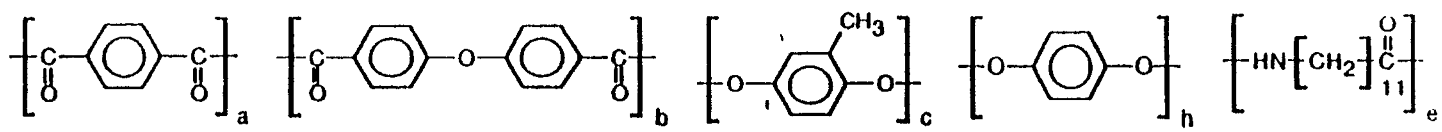 avec a = 0,318 ; b = 0,158 ; c = 0,381 ; h = 0,095 et e = 0,048 |
| 17 | 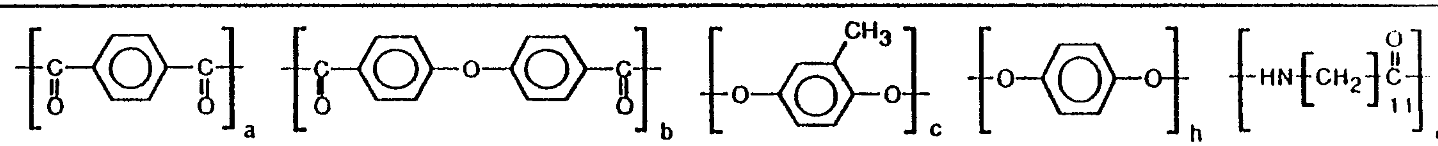 avec a = 0,303 ; b = 0,151 ; c = 0,364 ; h = 0,091 et e = 0,091 |

# TABLEAU 10

| NUMERO D'EXEMPLE | QUANTITE DE MONOMERES INTRODUITS DANS LE REACTEUR | | | | | | | | RAPPORT MOLAIRE INITIAL | | |
|---|---|---|---|---|---|---|---|---|---|---|---|
| | DIACIDES | | | | DIACETATE DE DIPHENOL | | OLIGOMERE DE POLYAMIDE DIACIDE | | | | |
| | T | | 4,4' DCDPE | | MeHQ di Ac | | PA 12.T (Mn 640) | | 4,4' DCDPE / T | 4,4'DCDPE + T / MeHQ di Ac | PA 12.T / Me HQ di Ac |
| | g | mole | g | mole | g | mole | g | mole | | | |
| 18 | 6,65 | 0,04 | 36,15 | 0,14 | 41,64 | 0,2 | 12,8 | 0,02 | 7 / 2 | 1 / 1 | 1 / 10 |
| 19 | 13,29 | 0,08 | 25,82 | 0,1 | 41,64 | 0,2 | 12,8 | 0,02 | 5 / 4 | 1 / 1 | 1 / 10 |
| 20 | 19,94 | 0,12 | 15,5 | 0,06 | 41,64 | 0,2 | 12,8 | 0,02 | 1 / 2 | 1 / 1 | 1 / 10 |

## TABLEAU 10 ( SUITE et FIN )

| NUMERO D'EXEMPLE | DUREE DE REACTION (MIN) | | TEMPERATURE DE REACTION (profil thermique) | TAUX DE TRANSFORMATION (%) | |
|---|---|---|---|---|---|
| | SOUS COURANT D'AZOTE | SOUS PRESSION REDUITE | | à la fin de l'etape sous azote | final de la reaction |
| 18 | 80 | 50 | 60 minutes à 280°C<br>20 minutes de 280 à 300°C<br>30 minutes à 300°C<br>20 minutes de 300 à 330°C | 87,5 | 98,9 |
| 19 | 75 | 85 | 120 minutes à 290°C<br>40 minutes de 290 à 340°C | 90,3 | 99,6 |
| 20 | 110 | 45 | 50 minutes à 265°C<br>10 minutes de 265 à 290°C<br>50 minutes à 290°C<br>45 minutes de 290 à 325°C | 92,4 | 98,7 |

TABLEAU 11

| EXEMPLE | TEMPERATURE DE FUSION (°C) | PLAGE D'ANISOTROPIE (°C) | VISCOSITE INHERENTE (dl/g) | CONDITIONS DE MOULAGE | | PROPRIETES EN TRACTION | | | PROPRIETES EN FLEXION | |
|---|---|---|---|---|---|---|---|---|---|---|
| | | | | TEMPERATURE D'INJECTION (°C) | TEMPERATURE DU MOULE (°C) | CONTRAINTE (MPa) | ALLONGEMENT A LA RUPTURE (%) | MODULE (MPa) | CONTRAINTE (MPa) | MODULE (MPa) |
| 18 | 260 | de 265 à plus de 360°C | 1,07 | 290 | 90 | 125 | 6,8 | 5625 | 110 | 3935 |
| 19 | 260 | de 265 à plus de 360°C | Insoluble | 295 | 90 | 114 | 3,2 | 6835 | 85,5 | 3610 |
| 20 | 288 | de 290 à plus de 360°C | 0,92 | 310 | 90 | 118 | 3,3 | 6950 | 135 | 5740 |

TABLEAU 12

| EXEMPLE | STRUCTURE DES PRODUITS |
|---|---|
| 18 | 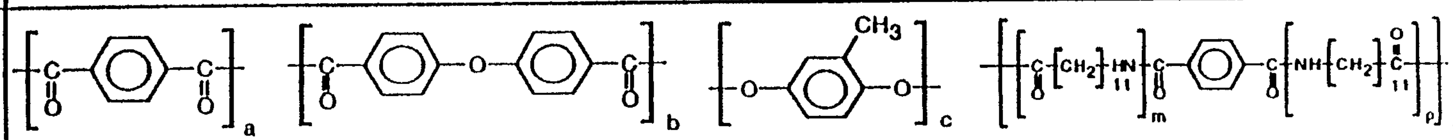<br>avec a = 0,10 ; b = 0,35 ; c = 0,50 et l = 0,05 avec m + p = 2,40 |
| 19 | 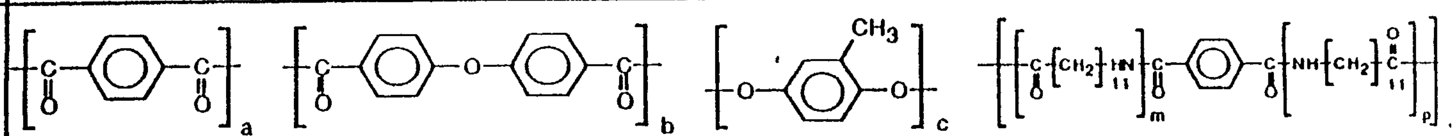<br>avec a = 0,20 ; b = 0,25 ; c = 0,50 et l = 0,05 avec m + p = 2,40 |
| 20 | 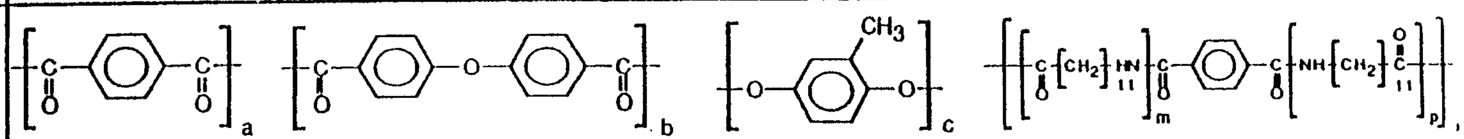<br>avec a = 0,30 ; b = 0,15 ; c = 0,50 et l = 0,05 avec m + p = 2,40 |

## Revendications

1. Copolyesteramide semialiphatique thermotrope constitué des unités récurrences.

$$\text{I}\qquad -\!\left(\underset{\underset{O}{\|}}{C} - Ar_1 - \underset{\underset{O}{\|}}{C}\right)\!-$$

$$\text{II}\qquad -\!\left(O - Ar_2 - O\right)\!-$$

$$\text{III}\qquad -\!\left(\underset{\underset{O}{\|}}{C} - A - X\right)\!-$$

dans lesquelles
$Ar_1$ représente un radical aromatique et/ ou cycloaliphatique, $Ar_2$ représente un radical aromatique et X est NH ou C = 0 avec :
si X est NH : A est une chaîne aliphatiques en $C_nH_{2n}$ linéaire ou ramifiée, et n compris entre 4 et 14
et si X est C = 0 : l'unité de récurrence

$$-\!\left(\underset{\underset{O}{\|}}{C} - A - X\right)\!-$$

correspond à un oligomère de polyamide alpha-oméga diacide de formule :

$$-\!\left(\underset{\underset{O}{\|}}{C} - R_1 - NH\right)\!\!-_{m}\ \underset{\underset{O}{\|}}{C} - R_2 - \underset{\underset{O}{\|}}{C}\ -\!\left(NH - R1 - \underset{\underset{O}{\|}}{C}\right)\!\!-_{m'}$$

avec :
$R_1$ représentant une chaîne aliphatique en $C_{n'}H_{2n'}$, linéaire ou ramifiée, n′ étant compris entre 4 et 14 ou une structure

$$R_3 - \underset{\underset{O}{\|}}{C} - NH - R_4$$

avec
$R_3$ et $R_{4'}$ identiques ou différents, représentant une chaîne aliphatique en $C_{n''}H_{2n''}$, linéaire ou ramifiée, n″ étant compris entre 2 et 24
et $R_2$ représentant un reste de diacide aliphatique, cycloaliphatique ou aromatique
m et m′, identiques ou différents étant compris entre 0 et 50 au moins l'un des deux étant au moins égal à

1.

2. Copolyesteramide selon la revendication 1 caractérisé en ce que l'unité de récurrence I est une entité issue d'un diacide aromatique ou cycloaliphatique ou encore de ses dérivés.

3. Copolyesteramide selon l'une des revendications 1 ou 2 caractérisé en ce que l'unité de récurrence II est une entité issue d'un diphénol ou encore de ses dérivés.

4. Copolyesteramide selon l'une des revendications 1 à 3 caractérisé en ce que l'unité de récurrence III est issue d'un oligomère de polyamide diacide, et/ou d'un aminoacide aliphatique et/ou d'un lactame.

5. Copolyesteramide selon la revendication 4 caractérisé en ce que l'unité de récurrence III est issue de la réaction d'une diamine aliphatique avec un diacide organique.

6. Copolyesteramide selon la revendication 5 caractérisé en ce que l'unité de récurrence III est issue de la réaction d'une diamine aliphatique avec un diacide cycloaliphatique ou aromatique.

7. Copolyesteramide selon la revendication 4 caractérisé en ce que l'unité de récurrence III est issue de la réaction d'un aminoacide aliphatique et/ou d'un lactame avec un diacide organique.

8. Copolyesteramide selon la revendication 7 caractérisé en ce que l'unité de récurrence III est issue de la réaction d'un aminoacide aliphatique et/ou d'un lactame avec un diacide cycloaliphatique ou aromatique.

9. Copolyesteramide selon la revendication 6 ou 8 caractérisé en ce que l'entité III est divisée en une ou deux entités III′ correspondant à l'entité III reliées à une entité I selon le schéma :

$$\underbrace{(\underset{\overset{\|}{O}}{C} - R_1 - NH)_m}_{III'}\ \underbrace{\underset{\overset{\|}{O}}{C} - R_2 - \underset{\overset{\|}{O}}{C}}_{I}\ \underbrace{(NH - R_1 - \underset{\overset{\|}{O}}{C})_{m'}}_{III'}$$

10. Copolyesteramide selon l'une des revendications 1 à 9 caractérisé en ce que le rapport massique des entités

$$\frac{III}{I + II + III}$$

est compris entre 1 et 50 %, et de préférence entre 1 et 30 %.

11. Copolyesteramide selon l'une des revendications 1 à 10 caractérisé en ce que lorsque dans l'entité III : X = NH, le rapport molaire des entites $\frac{I}{I}$ est compris entre 0,95 et 1,05 et X = (C = 0) le rapport molaire des entités

$$\frac{I + III}{II}$$

est compris entre 0,95 et 1,05.

12. Copolyesteramide selon l'une des revendications 1 à 11 caractérisé en ce que les masses moléculaires respectives des trois entités sont pour :

I compris entre 100 et 500

II compris entre 100 et 500

III compris entre 100 et 500 si X = NH et entre 300 et 15 000 et mieux entre 600 et 5 000 si X = CO.

13. Copolyesteramide selon l'une des revendications 1 à 12 caractérisé en ce que sa masse moléculaire est comprise entre 3 000 et 50 000.

14. Procédé de fabrication du copolyesteramide des revendications 1 à 13 caractérisé en ce qu'on condense à une température de 100 à 450°C un diacide aromatique ou cycloaliphatique ou un de ses dérivés, un diphénol ou un de ses dérives, et, un aminoacide aliphatique et/ou un lactame.

15. Procédé selon la revendication 14 caractérisé en ce qu'on substitue à l'aminoacide ou, au lactame un oligomère de polyamide alpha-oméga dicarboxylique.

16. Procédé selon la revendication 15 caractérisé en ce que l'oligomère de polyamide est obtenu par polycondensation préalable d'un lactame et/ou d'un aminoacide aliphatique et/ou d'une diamine aliphatique avec un diacide aliphatique, cycloaliphatique ou aromatique.

17. Procédé selon l'une des revendications 14 à 16 consistant en une polyesterification et polyamidification

directe entre au moins un diacide aromatique ou cycloaliphatique, au moins un diphénol, et au moins un aminoacide aliphatique et/ou au moins un lactame et/ou au moins un polyamide diacide.

18. Procédé selon l'une des revendications 14 à 16 consistant en une polyesterification et polyamidification entre au moins un diacide aromatique ou cycloaliphatique, au moins un diphénol et au moins un aminoacide et/ou au moins un lactame et/ou au moins un polyamidediacide en présence d'un diarylcarbonate.

19. Procédé selon l'une des revendications 14 à 16 consistant en une polyestérification et polyamidification entre au moins un diacide aromatique ou cycloaliphatique, au moins un diester de diphénol et au moins un aminoacide et/ou au moins un lactame et/ou au moins un polyamidediacide.

Office européen des brevets

# RAPPORT DE RECHERCHE EUROPEENNE

Numero de la demande

EP 90 40 1997

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 598 864 (J.R. CALDWELL et al.)<br>--- | | C 08 G 69/44 |
| D,A | US-A-4 182 842 (W.J. JACKSON)<br>--- | | |
| A | EP-A-0 272 992 (RHONE-POULENC)<br>& FR-A-2 607 818 (RHONE-POULENC) (Cat. D)<br>----- | | |
| | | | **DOMAINES TECHNIQUES RECHERCHES (Int. Cl.5)** |
| | | | C 08 G |

Le présent rapport a été établi pour toutes les revendications

| Lieu de la recherche | Date d'achèvement de la recherche | Examinateur |
|---|---|---|
| LA HAYE | 24-09-1990 | LEROY ALAIN |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)